(19) **Europäisches Patentamt / European Patent Office / Office européen des brevets**

(11) **EP 2 916 413 B1**

(12) **EUROPEAN PATENT SPECIFICATION**

(45) Date of publication and mention of the grant of the patent:
**06.04.2022 Bulletin 2022/14**

(21) Application number: **15157293.0**

(22) Date of filing: **03.03.2015**

(51) International Patent Classification (IPC):
**H02H 3/24** *(2006.01)*        **H02H 7/18** *(2006.01)*
**H02J 7/00** *(2006.01)*

(52) Cooperative Patent Classification (CPC):
**H02J 7/0031; H02J 7/0029;** H02J 7/00304; H02J 7/00306

(54) **Voltage cutoff circuit for an electrochemical cell**

SPANNUNGSABSCHALTVORRICHTUNG FÜR EINE ELEKTROCHEMISCHE ZELLE

CIRCUIT DE COUPURE DE TENSION POUR UNE CELLULE ÉLECTROCHIMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.03.2014 US 201414195267**

(43) Date of publication of application:
**09.09.2015 Bulletin 2015/37**

(73) Proprietor: **Greatbatch Ltd.**
**Clarence, NY 14031 (US)**

(72) Inventors:
  • **Peterson, Brian R.**
    **Cumberland, RI 02864-3558 (US)**
  • **Jankins, Eric**
    **Raynham, MA 02767 (US)**
  • **Johnson, Arden P.**
    **Arlington, MA 02474 (US)**
  • **Stawitzky, James K.**
    **North Tonawanda, NY 14120 (US)**
  • **Carroll, Jon J.**
    **Attleboro, MA 02703 (US)**
  • **Hession, John A.**
    **Braintree, MA 02184 (US)**

(74) Representative: **SSM Sandmair**
    **Patentanwälte Rechtsanwalt**
    **Partnerschaft mbB**
    **Joseph-Wild-Straße 20**
    **81829 München (DE)**

(56) References cited:
    **EP-A1- 0 525 744      US-A- 5 995 011**
    **US-B1- 7 586 292**

**Description**

Field of the Invention

The present invention relates to a circuit for operating a lithium oxyhalide electrochemical cell. In particular, the invention relates to a circuit for safely operating a lithium thionyl chloride electrochemical cell.

Prior Art

Primary lithium oxyhalide cells are used extensively in applications requiring high gravimetric and volumetric energy density. Among the many sizes and chemistries available, cells can be developed for low rate or high rate applications and to operate from temperatures as low as -70°C to as high as 200°C. The anode material usually consists of lithium or lithium alloyed with various elements such as aluminum, magnesium or boron. The cathode usually consists of some form of carbon which is held together using a suitable binder. The electrolyte generally consists of a solvent system of thionyl chloride, phosphoryl chloride or sulfuryl chloride. Often, additional compounds or interhalogen compounds such as sulfur dioxide, chlorine, bromine, bromine chloride and others may be dissolved therein to modify the cell for a particular purpose, such as extending the operating rate or temperature range of the cell. Electrolyte salts are also added to the solvent system to assist in ionic transfer during cell discharge. Such salts may include lithium chloride in combination with aluminum trichloride or gallium trichloride. Lithium tetrachloroaluminate salt (LAC) or lithium tetrachlorogallate salt (LGC) is then formed in-situ. Typically used catholytes include chlorinated sulfuryl chloride (CSC) having either LAC or LGC dissolved therein. These systems are commonly referred to as LAC/CSC and LGC/CSC.

Safety problems may result due to external electrical or mechanical abuse or internal failures of lithium batteries. An internal or external short circuit causes the cell temperature to rise. If the internal cell temperature of a lithium battery reaches the lithium melting point of about 180°C, melting of the lithium can result in rapid exothermic reactions that may cause catastrophic rupture of the cell.

The potential that a primary lithium cell may become unstable or rupture as a result of a short circuit is of particular concern for those utilizing lithium primary cells in hazardous environments, such as those environments comprising a flammable gas. Examples of these environments include oil and gas wells as well as some industrial settings. The electrical performance and wide temperature range of these primary lithium electrochemical cells make them ideal for powering a wide range of electrical devices in harsh environments. However, special precautions should be used when operating primary lithium oxyhalide cells, especially in hazardous environments.

An electrochemical cell that operates an electrical device in an explosive environment must comply with specific safety requirements that are defined in International Electrotechnical Commission (IEC) Standard 60079-11 "Electrical Apparatus for Explosive Gas Atmospheres: Intrinsic Safety". The standard defines various test parameters that must be passed by an electrical device and the electrochemical cell that powers the device before the device and cell can be certified to operate in an explosive gas atmosphere. According to the standard, a battery that is to be used in an explosive gas environment must not vent or rupture under a short circuit condition. Secondly, the cell is not to cause ignition of a defined flammable gas when a short circuit is applied to the cell.

In addition to the concern about the possibility of a cell rupture due to a short circuit, a primary lithium oxyhalide cell may become unstable when the cell is discharged beyond its useful life. In the case of a primary lithium thionyl chloride cell, $SO_2$ gas evolves within the cell's casing as a function of depth of discharge. As the $SO_2$ gas evolves within the cell during use, atmospheric pressure increases within the cell's casing. If swelling of the cell occurs, the electrolyte may leak from the casing. The leak can be slow, rapid or anywhere in-between. Whatever the leak rate, electrolyte leaks are undesirable and can damage that which is being powered by the cell.

Furthermore, as the primary cell reaches full depth of discharge, small amounts of the lithium anode may migrate throughout the cell, thereby possibly contributing to the electrical instability of the cell. Thus, as a precautionary safety measure, the energy capacity of a primary lithium chloride cell is usually not fully discharged. To minimize electrical instability and thus, reduce the possibility of cell rupture, the cell is usually disconnected from the electrical load before full cell discharge is achieved. Electrical circuits have been developed that disconnect a primary lithium electrochemical cell from the load when the cell's discharge voltage reaches a predetermined threshold or cutoff voltage. It is generally understood to those of ordinary skill in the art that the useful life of a primary lithium cell, for example of a moderate rate size D cell, is completed when it is depleted to about 1.5 volts as measured over an open circuit.

One such electrical cutoff circuit is disclosed in U.S. Patent No. 7,586,292 to Wakefield et al., which is assigned to the assignee of the present invention and incorporated herein by reference. Wakefield discloses an electrical circuit that utilizes a sensing circuit and an electrical switch to disconnect the cell from an electrical load when a predetermined discharge voltage is reached. However, after the circuit has been activated, and the cell has been disconnected from the load, the circuit must be manually reset for it to be activated again. This manual reset switch feature of the Wakefield circuit is not particularly desirable in situations where a cell may have been inadvertently disconnected from the load being powered prior to the end of the useful life of the cell.

For example, lithium oxyhalide cells, particularly lithium thionyl chloride electrochemical cells, are prone to exhibit voltage delay under some use conditions. In the lithium oxyhalide chemistry, the voltage delay phenomenon is primarily attributed to a passivation layer which forms on the lithium anode when in contact with the catholyte.

Specifically, the voltage delay phenomenon generally manifests itself as a rapid decrease in discharge voltage when an external load is placed upon the cell or battery, such as during the application of a short duration pulse or during a pulse train. Voltage delay can take one or both of two forms. One form is that the leading edge potential of the first pulse is lower than the end edge potential of the first pulse. In other words, the voltage of the cell at the instant a load is applied is lower than the voltage of the cell immediately before the load is removed. The second form of voltage delay is that the minimum potential of a first load is lower than the minimum potential of the last load when a series of loads have been applied. In either case, such a sharp decrease in discharge voltage, particularly when an electrical load is initially connected to the cell, may inadvertently cause these prior art voltage cutoff protection circuits, such as the one disclosed by Wakefield, to disconnect the cell from the load prior to depletion of the cell's useful life. Thus, in the case of the Wakefield circuit, the circuit would be required to be manually reset.

EP0525744 and US7586292 disclose an electrical circuit that utilizes a sensing circuit and an electrical switch to disconnect the cell from an electrical load when a predetermined discharge voltage is reached.

Accordingly, the present invention is directed to providing a voltage cutoff circuit that is capable of dynamically connecting and disconnecting an electrochemical cell to a load without the need for a reset switch. In addition, the voltage cutoff protection circuit of the present invention is designed to minimize inadvertent disconnections of the load due to the voltage delay phenomenon typically of primary lithium oxyhalide cells. Furthermore, other features are provided that enhance the operating safety of primary lithium oxyhalide cells when powering devices in hazardous environments, particularly explosive gas atmospheres.

SUMMARY OF THE INVENTION

The object of the present invention is, therefore, to provide an electrical circuit according to claim 1.

**That electrical circuit** is capable of dynamically connecting and disconnecting an electrochemical cell from an electrical load based on measurement of the cell's discharge voltage without the need for a reset switch. Specifically, the voltage cutoff circuit of the present invention comprises a voltage comparator that works in conjunction with a series of resistors and field effect transistors to create a voltage hysteresis, whereby the value of the measured discharge voltage required to reconnect a cell to the an electrochemical load is greater than the value of the cutoff discharge voltage. Thus, when the threshold cutoff voltage is reached, and the cell is disconnected from the electrical load, the circuit requires that the cell achieve a recovery voltage, i.e., a discharge voltage that is greater than the cutoff threshold voltage, before the cell is reconnected to the load. Therefore, if a dramatic drop in a cell's discharge voltage were to happen, due, for example, to the voltage delay effect, the circuit would reconnect the cell to the load when a specified recovery discharge cell voltage is achieved.

In addition, a fuse is incorporated within the electrical circuit to minimize the possibility of cell venting resulting from a short circuit. Furthermore, the present invention provides various features that improve the operational safety of an electrochemical cell, particularly that of a primary lithium oxyhalide cell.

These and other objects of the present invention will become increasingly more apparent to those skilled in the art by reference to the following description and to the appended drawings.

BRIEF DESCRIPTION OF THE DRAWINGS

FIG. 1 is an electrical schematic diagram of an embodiment of the electrical circuit of the present invention.
FIG. 2 is a graph illustrating the discharge voltage as a function of cell capacity for a typical primary lithium oxyhalide electrochemical cell.
FIG. 3 is a graph illustrating an embodiment of the oscillating effect of the discharge voltage that occurs when a cell is connected to an electrical circuit that does not comprise a voltage hysteresis control feature of the present invention.
FIG. 4 illustrates a graph showing an embodiment of the preferred discharge voltage hysteresis effect that occurs when an electrochemical cell is connected to an electrical circuit of the present invention.
FIG. 5 is an electrical schematic diagram of a preferred embodiment of the electrical circuit of the present invention.
FIG. 5A is an electrical schematic diagram of an alternative embodiment of a voltage comparator that could be utilized with the electrical circuit of the present invention.
FIG. 6 illustrates a cross-sectional view of an electrochemical cell comprising an external layer of an encapsulate material.

DETAILED DESCRIPTION OF THE PREFERRED EMBODIMENTS

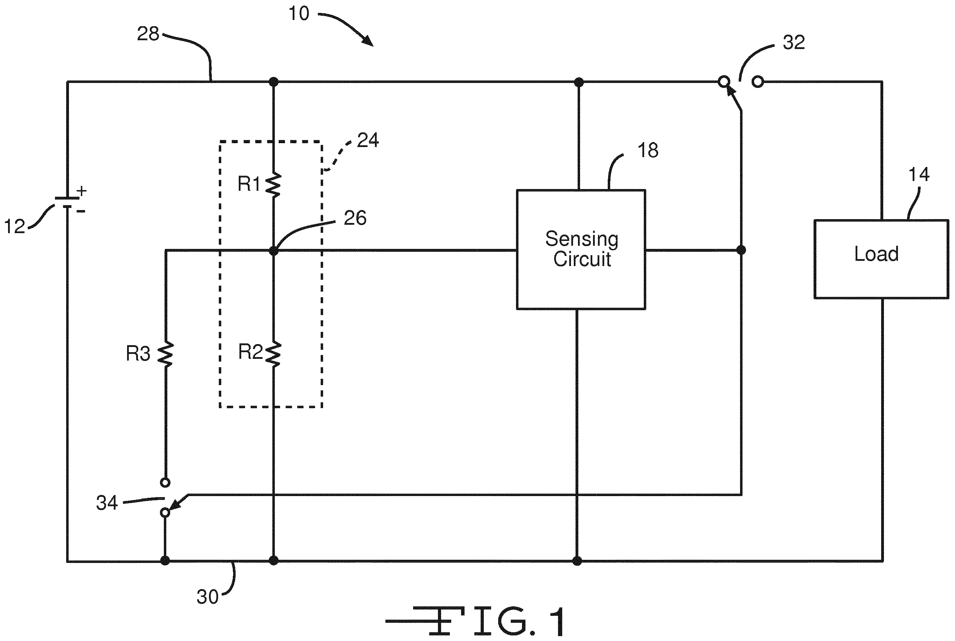

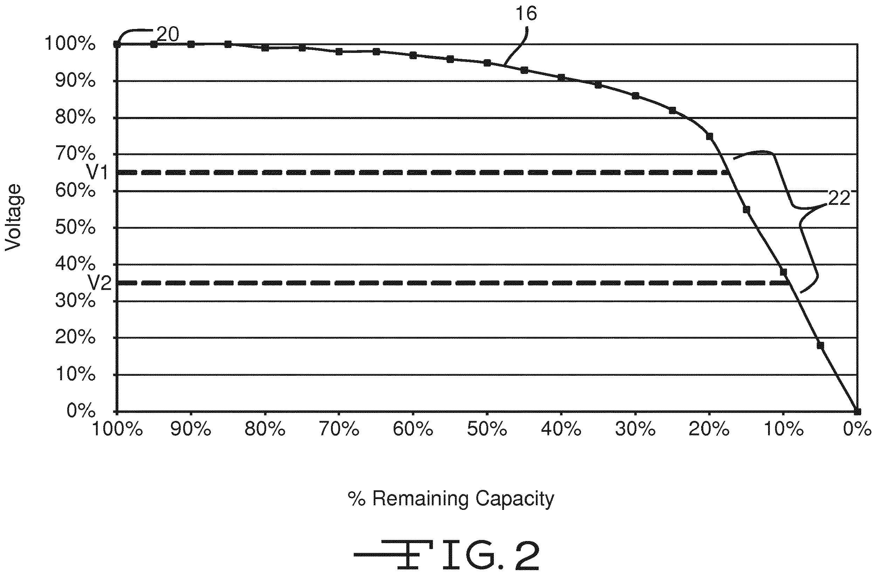

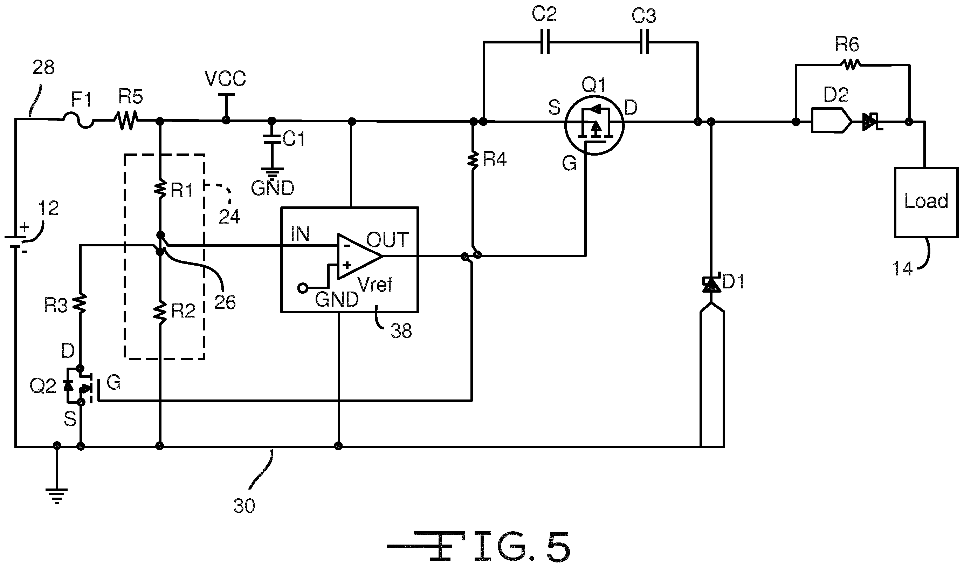

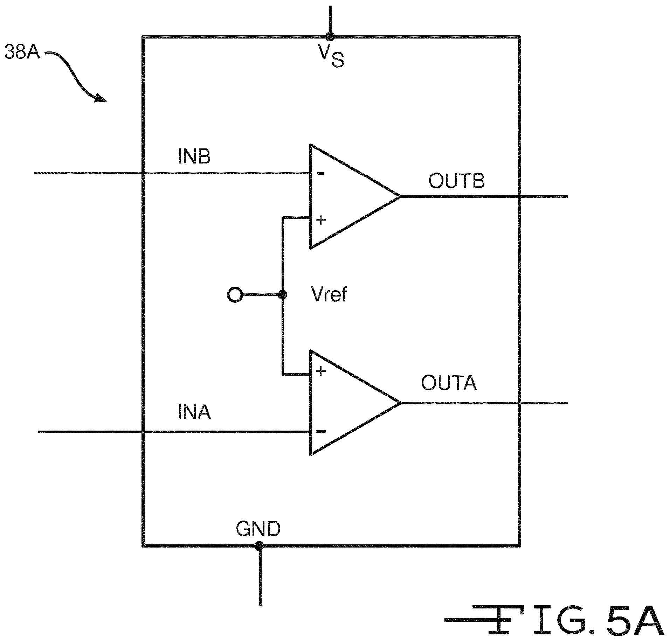

Now turning to the figures, FIGS. 1 and 5 illustrate an embodiment of an electrical schematic diagram of a voltage cutoff circuit 10 of the present invention. The electrical circuit 10 is designed to dynamically connect or disconnect an electrochemical cell 12 to or from an electrical load 14 based on the measured value of the discharge voltage 16 (FIG. 2) generated by the cell 12. More specifically, the electrical circuit 10 of the present invention is designed to either connect or disconnect the electrochemical cell 12 to the load 14 by actively monitoring and comparing the discharge voltage 16 of the electrochemical cell 12 to a cutoff threshold voltage. The circuit 10 of the present invention is configured such that when the discharge voltage 16 of the cell 12 is determined to be less than the cutoff threshold voltage, the cell 12 is disconnected from the electrical load 14. Likewise, when the discharge voltage 16 of the cell 12 is determined to be the same, or greater than the threshold voltage, the cell 12 is reconnected to the load 14.

As will be discussed in more detail, the circuit 10 comprises a series of resistors in combination with electrical switches, such as field effect transistors (FET). The switches are used to route the electrical current through the circuit 10. The resistors are arranged to establish a threshold voltage that is used as a determining value as to whether the cell 12 is connected to, or disconnected from, the electrical load 14. A sensing circuit 18, such as a voltage comparator 38 (FIG. 5), actively monitors and compares the discharge voltage 16 of the cell 12 to the threshold voltage value established by the arrangement of the resistors within the circuit 10. In addition, the sensing circuit 18 actuates the electrical switches that cause the electrochemical cell 12 to be connected or disconnected from the load 14. Furthermore, actuation of the electrical switches, by the sensing circuit 18, causes the electrical current of the electrochemical cell 12 to flow through a different arrangement of resistors that modify the cutoff threshold voltage from a first cutoff threshold voltage to a second cutoff threshold voltage, wherein the first and second threshold voltages are of different values. Therefore, the electrical circuit 10 of the present invention connects or disconnects the electrochemical cell 12 based on comparison of the cell's discharge voltage to that of a dynamically changing threshold voltage.

FIG. 2 illustrates a typical voltage discharge behavior of a primary lithium electrochemical cell under a constant or near constant current or power load. As shown, the cell's discharge voltage 16 decreases from an initial discharge voltage 20 of a fully charged cell under load. This decrease in discharge voltage 16 can be abrupt and occur as a precipitous drop 22 at near full depletion of the cell's voltage. Therefore, it is sometimes difficult to determine when the electrochemical cell 12 may become unstable. Thus, one means of improving safe operation of a cell, such as a primary lithium oxyhalide cell, is to choose a threshold cut off voltage that is greater than the discharge voltage at which the cell could become unstable, thereby providing a safety voltage buffer.

Referring back to FIG. 1, in a preferred embodiment the value of the first cutoff threshold voltage ($V_{first}$) is determined by a resistor divider 24, which comprises a first resistor $R_1$ and a second resistor $R_2$ that are connected in electrical series with each other. As illustrated in the electrical schematic diagram of FIGS. 1 and 5, the first and second resistors $R_1$, $R_2$ are positioned in opposition to each other about node 26. The value of the first cutoff threshold voltage is determined by the ratio of the first and second resistors $R_1$, $R_2$ at node 26. Thus, by selecting the appropriate resistors, the value of the threshold voltage of the cell 12 can be modified to suit the discharge voltage of a desired cell 12 for a specific application.

As illustrated in the electrical schematic diagrams of FIGS. 1 and 5, the first resistor $R_1$ is connected to a positive rail or power line 28 and the second resistor $R_2$ is connected to a negative rail or ground 30. It is noted that the resistors comprising the resistor divider 24 are sometimes referred to as a high side resistor and a low side resistor. In this case, the high side resistor is the first resistor $R_1$ and the low side resistor is the second resistor $R_2$. The value of the first cutoff threshold voltage is determined by equation 1 shown below:

$$Vfirst = \frac{(R1 + R2) \times Vref}{R2} \qquad \texttt{Equation 1}$$

were R1 is the resistance value in ohms of the first resistor, R2 is the resistance value in ohms of the second resistor and $V_{ref}$ is a reference voltage in volts that is internal to the sensing circuit 18, such as a voltage comparator 38 (FIG. 5).

As illustrated in the electrical schematic diagram of FIG. 1, the cutoff threshold voltage at node 26 is actively monitored and analyzed by the sensing circuit 18. In a preferred embodiment, the sensing circuit 18 dynamically compares the cutoff threshold voltage, generated at node 26, to that of the measured discharge voltage 16 of the cell 12. Actuation of the sensing circuit 18 is determined by comparison of the cutoff threshold voltage to the value of the discharge voltage 16 of the cell 12. If the value of the discharge voltage 16 is determined to be at least the same, or greater than that of the value of the cutoff threshold voltage, the cell 12 is connected to the electrical load 14. Likewise, if the value of the discharge voltage is determined to be less than the value of the cutoff threshold voltage, the cell 12 is disconnected from the electrical load 14. The value of the cutoff threshold voltage can be selected to be any desired value. Therefore, the value of the threshold voltage should be selected according to the specific chemistry of the electrochemical cell 12 such that the cell is disconnected from the load 14 at the appropriate cell discharge voltage prior to becoming unstable.

In a preferred embodiment, as illustrated in the electrical schematic diagram of FIG. 1, connection of the cell 12 to the load 14 is controlled through activation of electrical switches, particularly a first switch 32 and a second switch 34. If the value of discharge voltage 16 of the cell 12 is determined to be the same, or greater than, that of the value of the threshold voltage 16, the circuit 10 is configured such that the first switch 32 is in a closed position and the second switch 34 is in an open position. Actuation of the switches 32, 34 is controlled by the sensing circuit 18 which emits a signal to each of the respective switches. Thus, when the circuit 10 is configured to be connected to the load 14, the electrical current of the cell 12 is allowed to flow through power line 28 through the resistor divider 24 comprising resistor $R_1$ and $R_2$, the sensing circuit 18, and through the closed first switch 32 to power the load 14.

However, if the value of the discharge voltage 16 of the cell 12 is determined to be less than the value of the cutoff threshold voltage at node 26, the circuit 10 is configured so that the first switch 32 is in an open position. Thus, the electrical path to the load 14 is disconnected and current from the cell 12 is prevented from flowing to the load 14. In addition to opening the first switch 32, the sensing circuit 18 sends a signal to close the second switch 34. Thus, when the second switch 34 is closed, current is directed through a third resistor $R_3$.

As shown in the electrical schematic diagrams of FIGS. 1 and 5, the third resistor $R_3$ is electrically connected in parallel to the second resistor $R_2$ of the resistor divider 24. Thus, by adding the additional third resistor $R_3$ in parallel to the low side of the resistor divider 24, the ratio between the low and high side resistance is changed. Therefore, by changing the ratio between the high and low side of the resistor divider 24, the threshold voltage at node 26 is changed to a new, second cutoff threshold voltage value. More specifically, by adding the additional third resistor $R_3$ in parallel with the second resistor $R_2$, the cutoff threshold voltage is increased. Therefore, by effectively increasing the cutoff threshold voltage, the cell 12 is not reconnected to the load 14 until the discharge voltage of the cell 12 increases to a voltage that is at least the same as, or greater than that of the new second cutoff threshold voltage value. Like the first cutoff threshold voltage, the second cutoff threshold voltage is measured at node 26. This new, second threshold voltage value, which is greater than the first cutoff threshold voltage, is defined herein as the recovery voltage (Vrecovery) of the cell 12. Thus, for the cell 12 to be reconnected to the load 14, the discharge voltage 16 of the cell 12 must "recover" to a value that is at least the same as, or greater than, that of the second cutoff threshold voltage. The value of the second cutoff recovery voltage is mathematically calculated by equation 2 shown below:

$$V \sec ond = \frac{(R1 \times (R3 + R2) + R2 \times R3) \times Vref}{R2 \times R3} \qquad \text{Equation 2}$$

were R1 is the resistance value in ohms of the first resistor, R2 is the resistance value in ohms of the second resistor, R3 is the resistance value in ohms of the third resistor, and Vref is the reference voltage of the sensing circuit 18 or voltage comparator 38 (FIG. 5).

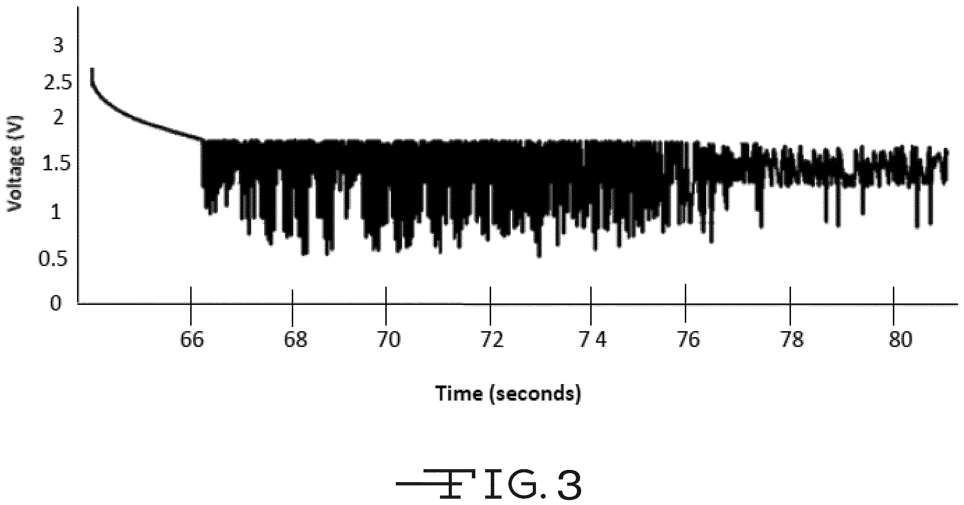

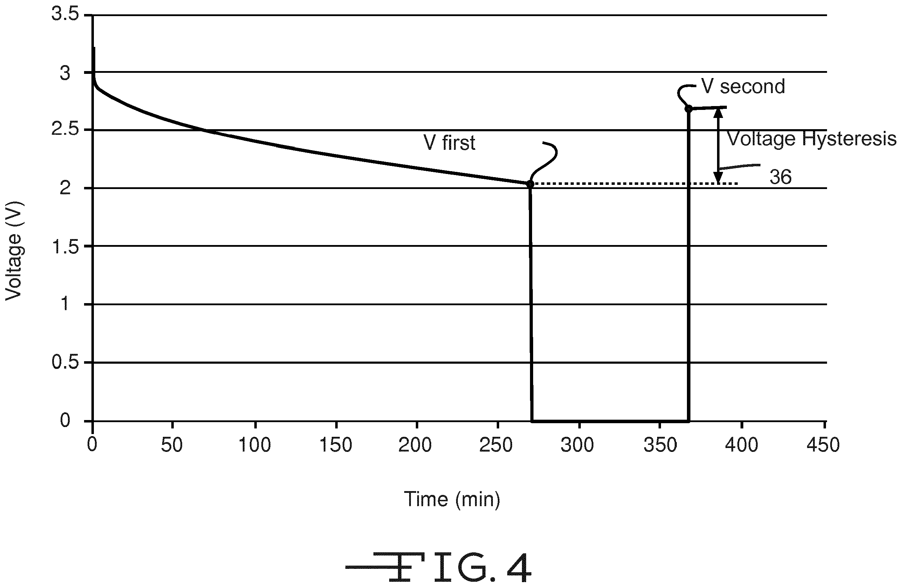

This increase in the value of the threshold voltage, created by the addition of the third resistor $R_3$, provides for a voltage hysteresis 36 (FIG. 4) that minimizes connect/disconnect or on/off oscillation. In general, when an electrical load 14 is connected to an electrochemical cell 12 the discharge voltage of the cell decreases. Likewise, when a load is disconnected from a cell 12, the discharge voltage of the cell typically increases as the cell relaxes. This relaxation behavior is typical of primary lithium electrochemical cells. Thus, without the voltage hysteresis 36 provided for by the third resistor $R_3$ within the electrical circuit 10 of the present invention, the circuit could oscillate very rapidly between respective "on" and "off" states as the sensing circuit 18 reacts to the changing discharge voltage. Hence, the discharge voltage 16 of the cell 12 could oscillate wildly between high and low voltages as the cell 12 is cyclically exercised and relaxed when connected and disconnected from the load 14. Such a rapid discharge oscillation behavior is illustrated in FIG. 3. As defined herein, the "on" state is when the cell 12 is connected to a load 14 and the "off" state is when the cell 12 is disconnected from the load 14. Such rapid "on" and "off" oscillations could create in-rush current whereby current from the cell 12 initially rushes in to power circuit components, such as capacitors, that may comprise the load 14. A rapidly oscillating "on" and "off" state is generally not desirable as this causes excessive wear of the circuit, which could result in circuit failure.

In comparison, FIG. 4 illustrates an example of the preferred voltage hysteresis response achieved by the electrical circuit 10 of the present invention. As shown, the discharge voltage 16 of the cell 12 slowly decreases until the first cutoff threshold voltage value is reached. In this example, the first cutoff threshold voltage is about 2.1V. Once the cutoff threshold voltage value is reached, the cell 12 is disconnected from the load 14, as the discharge voltage 16 is shown to drop to 0 V. After a period of about 100 seconds, as illustrated in the example, the discharge voltage of the cell has increased to at least the second cutoff threshold voltage or recovery voltage threshold voltage (about 2.6V) at which time, the cell is reconnected to the electrical load 14. However, once the cell 12 is reconnected to the load 14 through the closure of the first switch 32, the second switch 34 is also disconnected from the third resistor $R_3$. Thus, the cutoff threshold voltage reverts back to the lower, first cutoff threshold voltage value, as the electrical current is now

passing through resisters $R_1$ and $R_2$ and not $R_3$, as governed by Equation 1.

In an illustrative example, it is assumed that the electrical circuit 10 of the present invention comprises a first resistor $R_1$ having a resistance value of 5K ohms, a second resistor $R_2$ having a resistance value of 10K ohms, and a third resistor $R_3$ having a resistance value of 15K ohms. It is also assumed that the voltage reference value of the sensing circuit 18 is 1V. Thus, per equations 1 and 2 shown above, the respective first cutoff threshold voltage and second cutoff threshold voltage values would equal:

$$Vfirst = \frac{(5Kohms + 10Kohms) \times 1V}{10Kohms} = 1.5V$$

$$V\sec ond = \frac{(5Kohms \times (15Kohms + 10Kohms) + 10Kohms \times 15Kohms) \times 1V}{10Kohms \times 15Kohms} = 1.83V$$

Thus, as shown in the example above, the second cutoff threshold voltage or recovery threshold voltage value is greater than that of the cutoff threshold voltage by 0.33V. Since the voltage hysteresis value equals the difference between the voltage recovery threshold value and the cutoff threshold voltage, the hysteresis value for this example is 0.33V.

FIG. 5 illustrates a preferred embodiment of an electrical schematic of the electrical circuit 10 of the present invention. As illustrated the circuit 10 comprises a voltage comparator 38 that actively monitors the discharge voltage of the cell 12 in comparison to the cutoff threshold voltage. In a preferred embodiment, the voltage comparator 38 is an inverting comparator wherein its voltage output is connected to an electrical ground. Alternatively, as illustrated in FIG. 5A, the electrical circuit 10 of the present invention may comprise a non-inverting voltage comparator 38A. In a preferred embodiment, capacitor $C_1$ may be electrically connected to the voltage comparator 38, 38A as a decoupling capacitor.

In a preferred embodiment, as shown in the electrical schematic diagram of FIG. 5, the discharge voltage of the cell 12 is actively monitored by the voltage comparator 38 which compares the dynamically changing discharge voltage 16 to that of the threshold voltage of the circuit 10. The threshold voltage is created by the arrangement of the resistors at node 26. Similarly to the circuit embodied in the schematic of FIG. 1, the first cutoff threshold voltage is determined by the ratio of resistors $R_1$ and $R_2$ that comprise the resistor divider 24. As previously disclosed, the first cutoff threshold value is calculated by Equation 1. However, in this case, $V_{ref}$ would be equal to the internal reference voltage of the comparator 38, 38A.

As illustrated in the electrical schematic diagram of FIG. 5, connection of the cell 12 to the electrical load 14 is controlled through activation of at least one field effect transistors (FET). There is a first field effect transistor $Q_1$ and a second field effect transistor $Q_2$. In a preferred embodiment, the first field effect transistor $Q_1$ is a "p-channel" metal oxide semiconductor field effect transistor (MOSFET) and the second field effect transistor $Q_2$ is an "n-channel" metal oxide semiconductor field effect transistor (MOSFET), both of which comprise at least one source (S), one gate (G) and one drain (D). In a preferred embodiment, as shown in the electrical schematic diagram of FIG. 5, capacitors $C_2$ and/or $C_3$ may be electrically connected to the first field effect transistor $Q_1$ to shield the FET from electrostatic discharge.

In a preferred embodiment illustrated by the electrical schematic diagram of FIG. 5, if the discharge voltage 16 of the cell 12 is determined to be greater than that of the cutoff threshold voltage, the circuit 10 is configured such that the gate of the first FET $Q_1$ is in a closed position and the gate of the second FET $Q_2$ is in an open position. Thus, when the circuit 10 is configured to be electrically connected to the load 14, the electrical current of the cell 12 is allowed to flow through power line 28, through the resistor divider 24 comprising resistors $R_1$ and $R_2$, the voltage comparator 38, and the first FET $Q_1$ to power the load 14. Therefore, since the electrical current of the cell 12 flows through resistors $R_1$ and $R_2$ of the resistor divider, the value of the cutoff threshold voltage is governed by Equation 1, which determines the value of the first cutoff threshold voltage.

Likewise, if the discharge voltage 16 is determined to be less than the threshold voltage, the circuit 10 is configured such that the gate of the first FET $Q_1$ is in an open position. Therefore, since the electrical path to the load 14 is disconnected, the cell 12 is prevented from powering the load 14. So that current is directed through the third resistor $R_3$, the gate of the first FET $Q_1$ is open and the gate of the second FET $Q_2$ is closed. A voltage differential, created by resistor $R_4$, is used to pull up the gate of FET $Q_1$ and the gate of $Q_2$ to the voltage of Vcc. Voltage Vcc is the voltage input that provides electrical power to the components within the circuit 10. Therefore, since the electrical current of the cell 12 flows through resistors $R_1$, $R_2$ and $R_3$, the value of the cutoff threshold voltage is governed by Equation 2, which determines the value of the second cutoff threshold voltage.

As shown in the electrical schematic given in FIG. 5, a fuse $F_1$ may be electrically connected within the circuit 10 of the present invention. The fuse $F_1$ is incorporated into the circuit 10 to protect the cell 12 in the event of a short circuit. The incorporation of the fuse $F_1$ is particularly desirable when the cell 12 is utilized in hazardous environments, such as a flammable gas environment. Furthermore, the fuse $F_1$ should preferably be selected in compliance with IEC standard 60079-11. In a preferred embodiment, the fuse $F_1$ is positioned along power line 28 between the cell 12 and the first resistor $R_1$ such that in the unlikely event of an internal short, thermal energy and/or electrical current that would be emitted from the cell 12 would disconnect the fuse $F_1$ thereby, preventing potential damage to the connected load 14. In addition, the current rating of switch 32 (FIG. 1) or FET $Q_1$ (FIG. 5) should preferably be greater than that of the fuse $F_1$. Therefore, in an unlikely event of an electrical short, the fuse $F_1$ would disconnect the cell 12 from the circuit 10 before the switch 32 or FET $Q_1$ potentially overheats. Such overheating could potentially result in an undesirable thermal event, particularly in a hazardous environment.

In a preferred embodiment, the fuse $F_1$ may comprise a single piece of metal or alternatively, may comprise at least two wires that are intertwined. The fuse $F_1$ may be composed of a metal selected from the group consisting of stainless steel, stainless steel alloys, copper, nickel, nickel alloys, silver, tin and combinations thereof. In either case, it is preferred that the fuse $F_1$ is of a "fast disconnect" type in that the fuse disconnects before a voltage drop resulting from a short circuit event is seen. Furthermore, the fuse $F_1$ may be selected such that the current sufficient to cause the fuse to separate is in the range of 500mA to about 20A.

In addition, a current limiting resistor $R_5$ may also be incorporated within the circuit 10. Preferably, the current limiting resistor $R_5$ is electrically connected in series with the fuse $F_1$ and the cell 12. In a preferred embodiment, the value of the current limiting resistor $R_5$ may range from about 50m$\Omega$ to about 500m$\Omega$. The combination of the current limiting resistor $R_5$ with that of the fuse $F_1$ adds an additional level of safety for minimizing the potential of a thermal event.

Furthermore, as illustrated in the electrical schematic given in FIG. 5, the electrical circuit 10 of the present invention may also comprise protection diodes $D_1$ and/or $D_2$. Protection diodes $D_1$ and $D_2$ are preferably incorporated within the circuit 10 to prevent charging of the cell 12. These protection diodes are particularly beneficial when the cell 12 is of a primary electrochemistry such, as a primary lithium oxyhalide cell. Electrical charging of a lithium oxyhalide cell may lead to cell heating and possible venting of the cell. In a preferred embodiment, diodes $D_1$ and/or $D_2$ may comprise a Shottky barrier diode having a maximum peak reverse voltage of between about 10V to about 100V. Alternatively, a resistor $R_6$ may be used with or in lieu of the diode $D_1$, $D_2$.

The electrochemical cell 12 can be a primary or a secondary cell. However, in a preferred embodiment, the electrochemical cell 12 is of a primary electrochemical chemistry. The cell chemistry can be, for example, a magnesium electrochemical cell, a zinc manganese electrochemical cell, a nickel-metal hydride electrochemical cell, or a lithium electrochemical cell. Preferably, the cell is of a primary lithium oxyhalide cell. More preferably, the cell is of a primary lithium thionyl chloride electrochemical cell.

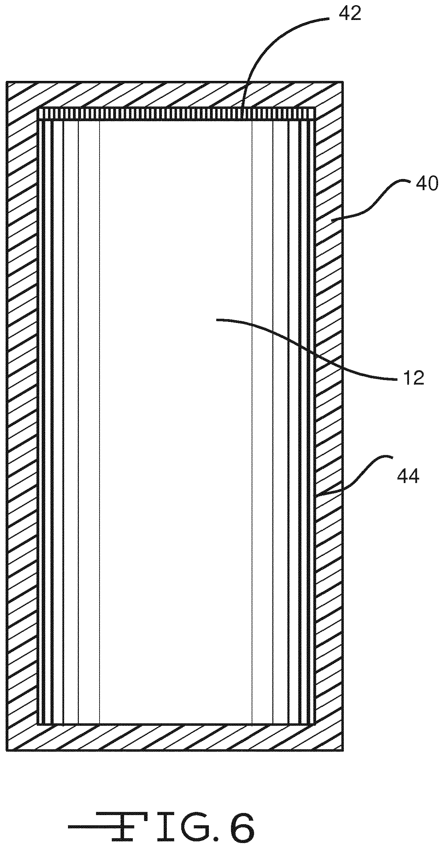

FIG. 6 illustrates a preferred embodiment in which the electrochemical cell 12 may be encased in a layer 40 of encapsulate material. Preferably, the encapsulate is of a non-electrically and/or a non-thermally conductive material. Non limiting examples include, but are not limited to, polymeric epoxies and resins such as urethane. In a preferred embodiment, the thickness of the layer ranges from 0.005 inches to about 0.025 inches. This layer of encapsulate material provides an added layer of protection in the unlikely event of a short circuit or other thermal event such as discharging the cell past its useful life. As shown in the cross-sectional view, a circuit board 42 comprising an electrical circuit is electrically connected to the cell 12. In a preferred embodiment, the circuit board 42 is shown positioned on an external side of a casing 44 for the cell 12. The layer of encapsulate material encases both the cell 12 and the circuit board 42 therewithin. Alternatively, the circuit board 42 may be positioned within the cell casing 44. In a preferred embodiment, the circuit board 42 may comprise the electrical circuit 10 of the present invention or a portion thereof.

The primary chemistry configuration can include a positive electrode of either a solid cathode active material supported on a current collector or a liquid catholyte system having an electrically conductive or electroactive material supported on the cathode current collector.

Regardless of the cell configuration, such primary oxyhalide cells preferably comprise an anode active material of a metal selected from Groups IA, IIA or IIIB of the Periodic Table of the Elements, including the alkali metals lithium, sodium, potassium, etc., and their alloys and intermetallic compounds including, for example, Li--Mg, Li--Si, Li--Al, Li--B, Li--Al--Mg and Li--Si--B alloys and intermetallic compounds. The preferred anode active material comprises lithium.

In a primary cell of either a solid positive electrode or an oxyhalide chemistry, the form of the anode may vary. Preferably the anode is a thin metal sheet or foil of the anode metal, pressed or rolled on a metallic anode current collector, i.e., preferably comprising nickel, to form an anode component. The anode component has an extended tab or lead of the same material as the anode current collector, i.e., preferably nickel, integrally formed therewith such as by welding and contacted by a weld to a cell case of conductive metal in a case-negative electrical configuration. Alternatively, the anode may be formed in some other geometry, such as a bobbin shape, cylinder or pellet to allow an alternate low surface cell design.

In the case of an oxyhalide chemistry, the cell comprises a cathode current collector of electrically conductive material supported on a conductive substrate. An oxyhalide cell operates in the following manner. When the ionically conductive catholyte solution becomes operatively associated with the anode and the cathode current collector, an electrical potential difference develops between terminals operatively connected to the anode and cathode current collector. The electrochemical reaction at the anode includes oxidation to form metal ions during cell discharge. The electrochemical reaction at the cathode current collector involves conversion of those ions which migrate from the anode to the cathode current collector into atomic or molecular forms. In addition, the halogen and/or interhalogen of the catholyte is believed to undergo a reaction or reactions with the nonaqueous solvent thereof resulting in the formation of a compound or complex which exhibits the observed open circuit voltage of the cell. Exemplary electrically conductive materials for the cathode current collector include graphite, coke, acetylene black, carbon black, and carbon monofluoride bonded on metal screens.

For an oxyhalide chemistry, the cell further comprises a nonaqueous, ionically conductive catholyte operatively associated with the anode and the cathode current collector. In a cell chemistry having a solid positive electrode, the anode and cathode electrodes are activated with an ionically conductive electrolyte. In either case, the catholyte and the electrolyte serve as a medium for migration of ions between the anode and the cathode current collector in the case of the oxyhalide chemistry and between the anode and the cathode electrodes in the solid positive electrode chemistry during the cell's electrochemical reactions.

For an oxyhalide cell, suitable nonaqueous solvent depolarizers exhibit those physical properties necessary for ionic transport, namely, low viscosity, low surface tension and wettability. In the case of a catholyte, suitable nonaqueous depolarizers are comprised of an inorganic salt dissolved in a nonaqueous codepolarizer system and, more preferably, an alkali metal salt dissolved in a catholyte solution comprising a halogen and/or interhalogen dissolved in a nonaqueous solvent. The halogen and/or interhalogen serve as a soluble depolarizer. They also can serve as a cosolvent in the electrochemical cell. The halogen is selected from the group of iodine, bromine, chlorine or fluorine while the interhalogen is selected from the group of $ClF$, $ClF_3$, $ICl$, $ICl_3$, $IBr$, $IF_3$, $IF_5$, $BrCl$, $BrF$, $BrF_3$, $BrF_5$, and mixtures thereof. The mole ratio of any one of the above-referenced halogens and/or interhalogens dissolved in any one of the above-referenced nonaqueous organic or inorganic solvents is from about 1:6 to about 1:1.

The nonaqueous solvent depolarizer may be one of the organic solvents which is substantially inert to the anode and cathode current collector materials. Those include tetrahydrofuran, propylene carbonate, acetonitrile, dimethyl sulfoxide, dimethyl foramide, dimethyl acetamide and in particular halogenated organic solvents such as 1,1,1,2,3,3,3-heptachloropropane or 1,4-difluorooctachlorobutane. The nonaqueous solvent depolarizer also may be one or a mixture of more than one of the inorganic solvents which can serve as both a solvent and a depolarizer, such as thionyl chloride, sulfuryl chloride, selenium oxychloride, chromyl chloride, phosphoryl chloride, phosphorous sulfur trichloride and others.

The ionic conductivity of the nonaqueous catholyte solution is preferably facilitated by dissolving a metal salt in the nonaqueous depolarizer. Examples of metal salts are lithium halides such as LiCl and LiBr and lithium salts of the $LiMX_n$ type, such as $LiPF_6$, $LiBF_4$, $LiAsF_6$, $LiSbF_6$, $LiClO_4$, $LiAlCl_4$, $LiGaCl_4$, $LiC(SO_2CF_3)_3$, $LiN(SO_2CF_3)_2$, LiSCN, $LiO_3SCF_2CF_3$, $LiC_6F_5SO_3$, $LiO_2$, $LiO_2$ $CCF_3$, $LiSO_3F$, $LiB(C_6H_5)_4$, $LiCF_3$ $SO_3$, and mixtures thereof. Suitable salt concentrations typically range between about 0.25 to about 1.5 molar. Thus, the solution of halogen and/or interhalogens, the nonaqueous solvent depolarizer and, optionally, the ionic salt, serve as the codepolarizer and catholyte of the oxyhalide cell.

In electrochemical systems of either a primary or a secondary chemistry having a solid cathode or solid positive electrode, the nonaqueous solvent system comprises low viscosity solvents including tetrahydrofuran (THF), methyl acetate (MA), diglyme, trigylme, tetragylme, dimethyl carbonate (DMC), ethylmethyl carbonate (EMC), 1,2-dimethoxyethane (DME), diisopropylether, 1,2-diethoxyethane, 1-ethoxy, 2-methoxyethane, dipropyl carbonate, ethylmethyl carbonate, methylpropyl carbonate, ethylpropyl carbonate, diethyl carbonate, and mixtures thereof. While not necessary, the electrolyte also preferably includes a high permittivity solvent selected from cyclic carbonates, cyclic esters and cyclic amides such as propylene carbonate (PC), ethylene carbonate (EC), butylene carbonate, acetonitrile, dimethyl sulfoxide, dimethyl formamide, dimethyl acetamide, γ-butyrolactone (GBL), γ-valerolactone, N-methyl-pyrrolidinone (NMP), and mixtures thereof. The nonaqueous solvent system also includes at least one of the previously described lithium salts in a concentration of about 0.8 to about 1.5 molar. For a solid cathode primary or secondary cell having lithium as the anode active material, such as of the Li/SVO couple, the preferred electrolyte is $LiAsF_6$ in 50:50, by volume, mixture of PC/DME. For a Li/$CF_x$ cell, the preferred electrolyte is 1.0M to 1.4M $LiBF_4$ in γ-butyrolactone (GBL).

It is appreciated that various modifications to the inventive concepts described herein may be apparent to those of ordinary skill in the art without departing from the scope of the present invention as defined by the appended claims.

**Claims**

1. An electrical circuit (10), comprising:

> a) a sensing circuit (18) electrically connectable to an electrochemical cell capable of generating an electrical current and a discharge voltage to thereby power an electrical load, wherein the sensing circuit (18) is configured to measure the discharge voltage generated by the electrochemical cell;

**characterized in that** the electrical circuit (10) further comprises:

b) a first resistor ($R_1$), a second resistor ($R_2$), and a third resistor ($R_3$), wherein the first and second resistors ($R_1$, $R_2$) are electrically connected in series and in opposition to each other at a node (26) to thereby form a resistor divider (24) electrically connected to the sensing circuit (18), and wherein a ratio of the first and second resistors ($R_1$, $R_2$) determines a first threshold voltage, and wherein the third resistor ($R_3$) is electrically connected in parallel to the second resistor ($R_2$) to thereby provide a second threshold voltage at the node (26) that is greater than the first threshold voltage; and

c) a first electrical switch (32) and a second electrical switch (34), both switches (32, 34) being electrically connected to the sensing circuit (18),

d) wherein, when the sensing circuit (18) determines that the discharge voltage generated by the electrochemical cell is the same as, or greater than, the first threshold voltage, the sensing circuit (18) closes the first switch (32) and opens the second switch (34) so that the electrochemical cell (12) is electrically connected through the resistor divider (24) comprising the first and second resistors (32, 34), the sensing circuit (18) and the closed first switch (32) to the electrical load (14), and

e) wherein, when the sensing circuit (18) determines that the discharge voltage generated by the electrochemical cell is less than the first threshold voltage, the sensing circuit (18) opens the first switch (32) to disconnect the electrochemical cell (12) from the electrical load (14) and closes the second switch (34) to electrically connect the electrochemical cell to the third resistor ($R_3$) electrically connected in parallel to the second resistor ($R_2$) of the resistor divider (24), and

f) wherein, when the discharge voltage of the electrochemical cell increases to the same as or greater than the second threshold voltage, the sensing circuit (18) opens the second switch (34) and closes the first switch (32) so that the electrochemical cell (12) is electrically reconnected through the resistor divider (24), the sensing circuit (18) and the closed first switch (32) to the electrical load (14).

2. The electrical circuit (10) of claim 1, wherein the electrochemical cell (12) is a primary cell or a rechargeable cell.

3. The electrical circuit (10) of any of claims 1 - 2, wherein the sensing circuit (18) comprises a voltage comparator (38).

4. The electrical circuit (10) of any of claims 1 - 3, further comprising a fuse ($F_1$) and/or a diode ($D_1$) electrically connected between the electrochemical cell (12) and the resistor divider (24) .

5. The electrical circuit of any of claims 1 - 4, wherein the first threshold voltage is defined by the equation:

$$Vfirst = \frac{(R1 + R2)X\,Vref}{R2}$$

wherein $R_1$ is a resistance value of the first resistor, $R_2$ is a resistance value of the second resistor and Vref is a reference voltage of the sensing circuit (10).

6. The electrical circuit of any of claims 1 - 5, wherein the second threshold voltage is defined by the equation:

$$Vsecond = \frac{(R1X(R3 + R2) + R2XR3)X\,Vref}{R2\,X\,R3}$$

wherein $R_1$ is a resistance value of the first resistor, $R_2$ is a resistance value of the second resistor, $R_3$ is a resistance value of a third resistor and Vref is a reference voltage of the sensing circuit (18) [[(10)]].

7. The electrical circuit (10) of claim 2, wherein the primary cell (12) comprises:

a) a casing;
b) a cathode current collector and a first electrode comprising lithium positioned within the casing; and
c) a catholyte comprising an inorganic depolarizer solvent provided with a halogen or an interhalogen dissolved therein.

8. The electrical circuit (10) of claim 7, wherein the interhalogen is selected from the group consisting of ClF, ClF$_3$, ICl,

ICl$_3$, IBr, IF$_3$, IF$_5$, BrCl, BrF, BrF$_3$, BrF$_5$, and mixtures thereof and wherein the halogen is selected from the group consisting of iodine, bromine, chlorine, fluorine, and mixtures thereof.

9. The electrical circuit (10) of claim 7, wherein the first electrode comprises a lithium alloy selected from the group consisting of Li--Mg, Li--Si, Li--Al, Li--B, Li--Si--B, Li--Al-Mg, and mixtures thereof.

10. The electrical circuit (10) of claim 7, wherein the catholyte includes at least one salt selected from the group consisting of LiCl, LiBr, and mixtures thereof.

11. The electrical circuit (10) of any of claims 1 - 10, wherein at least one of the first switch (32) and the second switch (34) is selected from the group of a metal oxide semiconductor field effect transistor, a "p-channel" field effect transistor, and a "n-channel" field effect transistor.

12. The electrical circuit (10) of any of claims 1 - 11, wherein the first resistor (R$_1$) is electrically connected to a positive rail or power line (28) of the electrical circuit (10), the second resistor (R$_2$) connected to a negative rail or ground (30) of the electrical circuit (10), and the third resistor (R$_3$) is electrically connectable in parallel to the second resistor (R$_2$) .

**Patentansprüche**

1. Elektrische Schaltung (10) mit:

a) einer Erfassungsschaltung (18), die elektrisch mit einer elektrochemischen Zelle verbindbar ist, die einen elektrischen Strom und eine Entladungsspannung erzeugen kann, um dadurch eine elektrische Last mit Strom zu versorgen, wobei die Erfassungsschaltung (18) konfiguriert ist, um die von der elektrochemischen Zelle erzeugte Entladungsspannung zu messen;

**dadurch gekennzeichnet, dass** die elektrische Schaltung (10) ferner umfasst:

b) einen ersten Widerstand (R$_1$), einen zweiten Widerstand (R$_2$) und einen dritten Widerstand (R$_3$), wobei der erste und der zweite Widerstand (R$_1$, R$_2$) elektrisch in Reihe und an einem Knoten (26) einander entgegengesetzt geschaltet sind, um dadurch einen Widerstandsteiler (24) zu bilden, der elektrisch mit der Erfassungsschaltung (18) verbunden ist, und wobei ein Verhältnis des ersten und des zweiten Widerstands (R$_1$,R$_2$) eine erste Schwellenspannung bestimmt, und wobei der dritte Widerstand (R$_3$) elektrisch parallel zu dem zweiten Widerstand (R$_2$) geschaltet ist, um dadurch eine zweite Schwellenspannung an dem Knoten (26) bereitzustellen, die größer als die erste Schwellenspannung ist; und

c) einen ersten elektrischen Schalter (32) und einen zweiten elektrischen Schalter (34), wobei beide Schalter (32, 34) elektrisch mit der Erfassungsschaltung (18) verbunden sind,

d) wobei, wenn die Erfassungsschaltung (18) bestimmt, dass die von der elektrochemischen Zelle erzeugte Entladungsspannung gleich oder größer als die erste Schwellenspannung ist, die Erfassungsschaltung (18) den ersten Schalter (32) schließt und den zweiten Schalter (34) öffnet, so dass die elektrochemische Zelle (12) elektrisch durch den Widerstandsteiler (24) mit der elektrischen Last (14) verbunden ist, der den ersten und zweiten Widerstand (32, 34), die Erfassungsschaltung (18) und den geschlossenen ersten Schalter (32) umfasst, und

e) wobei, wenn die Erfassungsschaltung (18) bestimmt, dass die von der elektrochemischen Zelle erzeugte Entladungsspannung kleiner als die erste Schwellenspannung ist, die Erfassungsschaltung (18) den ersten Schalter (32) öffnet, um die elektrochemische Zelle (12) von der elektrischen Last (14) zu trennen, und den zweiten Schalter (34) schließt, um die elektrochemische Zelle elektrisch mit dem dritten Widerstand (R$_3$) zu verbinden, der elektrisch parallel zu dem zweiten Widerstand (R$_2$) des Widerstandsteilers (24) geschaltet ist, und

f) wobei, wenn die Entladespannung der elektrochemischen Zelle auf gleich oder größer als die zweite Schwellenspannung ansteigt, die Erfassungsschaltung (18) den zweiten Schalter (34) öffnet und den ersten Schalter (32) schließt, so dass die elektrochemische Zelle (12) über den Widerstandsteiler (24), die Erfassungsschaltung (18) und den geschlossenen ersten Schalter (32) wieder elektrisch mit der elektrischen Last (14) verbunden ist.

2. Elektrische Schaltung (10) nach Anspruch 1, wobei die elektrochemische Zelle (12) eine Primärzelle oder eine wiederaufladbare Zelle ist.

3. Elektrische Schaltung (10) nach einem der Ansprüche 1-2, wobei die Erfassungsschaltung (18) einen Spannungskomparator (38) umfasst.

4. Elektrische Schaltung (10) nach einem der Ansprüche 1-3, die ferner eine Sicherung ($F_1$) und/oder eine Diode ($D_1$) umfasst, die elektrisch zwischen die elektrochemische Zelle (12) und den Widerstandsteiler (24) geschaltet sind.

5. Elektrische Schaltung nach einem der Ansprüche 1-4, wobei die erste Schwellenspannung durch die folgende Gleichung definiert ist:

$$Vfirst = \frac{(R1 + R2)X\,Vref}{R2}$$

wobei $R_1$ ein Widerstandswert des ersten Widerstands ist, $R_2$ ein Widerstandswert des zweiten Widerstands ist und Vref eine Referenzspannung der Erfassungsschaltung (10) ist.

6. Elektrische Schaltung nach einem der Ansprüche 1-5, wobei die zweite Schwellenspannung durch die Gleichung definiert ist:

$$Vsecond = \frac{(R1X(R3 + R2) + R2XR3)X\,Vref}{R2\,X\,R3}$$

wobei $R_1$ ein Widerstandswert des ersten Widerstands ist, $R_2$ ein Widerstandswert des zweiten Widerstands ist, $R_3$ ein Widerstandswert eines dritten Widerstands ist und Vref eine Referenzspannung der Erfassungsschaltung (18) ist [[(10 )]].

7. Elektrische Schaltung (10) nach Anspruch 2, wobei die Primärzelle (12) umfasst:

   a) ein Gehäuse;
   b) einen Kathodenstromkollektor und eine Lithium aufweisende erste Elektrode, die innerhalb des Gehäuses positioniert sind; und
   c) einen Katholyten, mit einem anorganischen Depolarisationslösungsmittel, das mit einem darin gelösten Halogen oder Interhalogen versehen ist.

8. Elektrische Schaltung (10) nach Anspruch 7, wobei das Interhalogen ausgewählt ist aus der Gruppe bestehend aus CIF, $CIF_3$, ICI, $ICl_3$, IBr, $IF_3$, $IF_5$, BrCl, BrF, $BrF_3$, $BrF_5$ und Gemischen davon, und wobei das Halogen ausgewählt ist aus der Gruppe bestehend aus Jod, Brom, Chlor, Fluor und Gemischen davon.

9. Elektrische Schaltung (10) nach Anspruch 7, wobei die erste Elektrode eine Lithiumlegierung umfasst, die aus der Gruppe ausgewählt ist, die aus Li--Mg, Li--Si, Li--Al, Li--B, Li--Si-B, Li--Al--Mg und Gemischen davon besteht.

10. Elektrische Schaltung (10) nach Anspruch 7, wobei der Katholyt mindestens ein Salz enthält, das aus der Gruppe ausgewählt ist, die aus LiCl, LiBr und Gemischen davon besteht.

11. Elektrische Schaltung (10) nach einem der Ansprüche 1-10, wobei mindestens der erste Schalter (32) oder der zweite Schalter (34) ausgewählt ist aus der Gruppe mit einem Metalloxid-Halbleiter-Feldeffekttransistors, einem "p-Kanal"-Feldeffekttransistor und einem "n-Kanal"-Feldeffekttransistor.

12. Elektrische Schaltung (10) nach einem der Ansprüche 1-11, wobei der erste Widerstand ($R_1$) elektrisch mit einer positiven Schiene oder Stromleitung (28) der elektrischen Schaltung (10) verbunden ist, der zweite Widerstand ($R_2$) mit einer negativen Schiene oder Erde (30) der elektrischen Schaltung (10) verbunden ist, und der dritte Widerstand ($R_3$) elektrisch parallel zu dem zweiten Widerstand ($R_2$) schaltbar ist.

**Revendications**

1. Circuit électrique (10), comprenant :

a) un circuit de détection (18) électriquement connectable à une cellule électrochimique capable de générer un courant électrique et une tension de décharge pour ainsi alimenter une charge électrique, dans lequel le circuit de détection (18) est configuré pour mesurer la tension de décharge générée par la cellule électrochimique ;

**caractérisé en ce que** le circuit électrique (10) comprend en outre :

b) une première résistance ($R_1$), une deuxième résistance ($R_2$), et une troisième résistance électrique ($R_3$), dans lequel les première et deuxième résistances ($R_1$, $R_2$) sont électriquement connectées en série et en opposition l'une à l'autre au niveau d'un nœud (26) pour ainsi former un diviseur de résistances (24) électriquement connecté au circuit de détection (18), et dans lequel un rapport des première et deuxième résistances ($R_1$, $R_2$) détermine une première tension de seuil, et dans lequel la troisième résistance ($R_3$) est électriquement connectée en parallèle à la deuxième résistance ($R_2$) pour ainsi fournir une seconde tension de seuil au niveau du nœud (26) qui est supérieure à la première tension de seuil ; et

c) un premier commutateur électrique (32) et un second commutateur électrique (34), les deux commutateurs (32, 34) étant électriquement connectés au circuit de détection (18),

d) dans lequel, lorsque le circuit de détection (18) détermine que la tension de décharge générée par la cellule électrochimique est identique ou supérieure à la première tension de seuil, le circuit de détection (18) ferme le premier commutateur (32) et ouvre le second commutateur (34) pour que la cellule électrochimique (12) soit électriquement connectée, par l'intermédiaire du diviseur de résistances (24) comprenant les première et deuxième résistances (32, 34), du circuit de détection (18) et du premier commutateur fermé (32), à la charge électrique (14), et

e) dans lequel, lorsque le circuit de détection (18) détermine que la tension de décharge générée par la cellule électrochimique est inférieure à la première tension de seuil, le circuit de détection (18) ouvre le premier commutateur (32) pour déconnecter la cellule électrochimique (12) à partir de la charge électrique (14) et ferme le second commutateur (34) pour connecter électriquement la cellule électrochimique à la troisième résistance ($R_3$) électriquement connectée en parallèle à la deuxième résistance ($R_2$) du diviseur de résistances (24), et

f) dans lequel, lorsque la tension de décharge de la cellule électrochimique augmente pour être identique ou supérieure à la seconde tension de seuil, le circuit de détection (18) ouvre le second commutateur (34) et ferme le premier commutateur (32) pour que la cellule électrochimique (12) soit électriquement reconnectée, par l'intermédiaire du diviseur de résistances (24), du circuit de détection (18) et du premier commutateur fermé (32), à la charge électrique (14).

2. Circuit électrique (10) selon la revendication 1, dans lequel la cellule électrochimique (12) est une cellule primaire ou une cellule rechargeable.

3. Circuit électrique (10) selon l'une quelconque des revendications 1 et 2, dans lequel le circuit de détection (18) comprend un comparateur de tension (38).

4. Circuit électrique (10) selon l'une quelconque des revendications 1 à 3, comprenant en outre un fusible ($F_1$) et/ou une diode ($D_1$) électriquement connectés entre la cellule électrochimique (12) et le diviseur de résistances (24) .

5. Circuit électrique selon l'une quelconque des revendications 1 à 4, dans lequel la première tension de seuil est définie par l'équation :

$$V first = \frac{(R1 + R2) X \, Vref}{R2}$$

$R_1$ étant une valeur de résistance de la première résistance, $R_2$ étant une valeur de résistance de la deuxième résistance et Vref étant une tension de référence du circuit de détection (10).

6. Circuit électrique selon l'une quelconque des revendications 1 à 5, dans lequel la seconde tension de seuil est définie par l'équation :

$$V second = \frac{(R1 X (R3 + R2) + R2 X R3) X \, Vref}{R2 \, X \, R3}$$

$R_1$ étant une valeur de résistance de la première résistance, $R_2$ étant une valeur de résistance de la deuxième résistance, $R_3$ étant une valeur de résistance d'une troisième résistance et Vref étant une tension de référence du circuit de détection (18) [[(10)]].

7. Circuit électrique (10) selon la revendication 2, dans lequel la cellule primaire (12) comprend :

   a) un boîtier ;
   b) un collecteur de courant de cathode et une première électrode comprenant du lithium, positionnés à l'intérieur du boîtier ; et
   c) un catholyte comprenant un solvant dépolarisant inorganique pourvu d'un halogène ou d'un interhalogène dissout dans celui-ci.

8. Circuit électrique (10) selon la revendication 7, dans lequel l'interhalogène est sélectionné parmi le groupe constitué de : CIF, CIF$_3$, ICl, ICl$_3$, IBr, IF$_3$, IF$_5$, BrCl, BrF, BrF$_3$, BrF$_5$, et mélanges de ceux-ci et dans lequel l'halogène est sélectionné parmi le groupe constitué de : iode, brome, chlore, fluor, et mélanges de ceux-ci.

9. Circuit électrique (10) selon la revendication 7, dans lequel la première électrode comprend un alliage de lithium sélectionné parmi le groupe constitué de : Li--Mg, Li--Si, Li--Al, Li--B, Li--Si--B, Li--Al--Mg, et mélanges de ceux-ci.

10. Circuit électrique (10) selon la revendication 7, dans lequel le catholyte inclut au moins un sel sélectionné parmi le groupe constitué de : LiCl, LiBr, et mélanges de ceux-ci.

11. Circuit électrique (10) selon l'une quelconque des revendications 1 à 10, dans lequel au moins un du premier commutateur (32) et du second commutateur (34) est sélectionné parmi le groupe de : un transistor à effet de champ à semi-conducteur d'oxide métallique, un transistor à effet de champ à « canal p », et un transistor à effet de champ à « canal n ».

12. Circuit électrique (10) selon l'une quelconque des revendications 1 à 11, dans lequel la première résistance ($R_1$) est électriquement connectée à un rail positif ou une ligne électrique (28) du circuit électrique (10), la deuxième résistance ($R_2$) est connectée à un rail négatif ou une masse (30) du circuit électrique (10), et la troisième résistance ($R_3$) est électriquement connectable en parallèle à la deuxième résistance ($R_2$).

EP 2 916 413 B1

FIG. 1

FIG.2

**FIG.3**

EP 2 916 413 B1

FIG.4

FIG.5

FIG.5A

FIG.6

**EP 2 916 413 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7586292 B, Wakefield

- EP 0525744 A